# EUROPEAN PATENT APPLICATION

(11) **EP 4 618 533 A1**
(43) Date of publication of application: **17.09.2025**
(21) Application number: 24163956.6
(22) Date of filing: 15.03.2024
(51) Int. Cl.: H04N 17/00, B60R 11/04, G01S 17/88, G03B 17/02, G03B 30/00, H04N 23/50, H04N 23/51, H04N 23/54, H04N 23/55, G02B 27/32

(54) **A SAFETY DEVICE FOR MONITORING TARGETS IN AN ENVIRONMENT**

(71) Applicant: Inxpect S.p.A., 25131 Brescia (BS) (IT)
(72) Inventor: Bettelli, Roberto, 25131 Brescia BS (IT)
(74) Representative: Perani & Partners S.p.A.

(57) **Abstract**

A safety device (1) for monitoring targets comprises an image sensor (4) arranged in a main case (2), and an optical lens (31) fitted in a through channel (24) of the case (2), which projects on the image sensor (4) an optical image of a field of view. A marker element (6) is mounted in the through channel (24) and surrounds the lens element (3). A marker portion (61) of the marker element (6) is arranged to appear in the optical image as a predetermined visual marker. In the preferred marker element (6), the marker portion (61) is removably fitted in the channel (24) and is formed by prongs (63) projecting from an annular mounting portion (62) and contrasting with a color of the channel wall (25). A monitoring system (7) performs a safety function, by detecting targets in the environment based on environment image data, and a diagnostic and/or calibration function based on marker image data, both collected by the image sensor (4).

## Description

### Field of the invention

The present invention relates to safety device for monitoring targets in an environment, in particular optical safety devices and hybrid safety devices including an image sensor and a further target detection sensor such as a radar, lidar or laser scanner sensor. In more detail, the invention relates to a marker element included in the safety device for diagnostic and/or calibration functions.

### Background of the invention

Safety devices are known in the art for monitoring targets in an environment. They may include one or more sensors, of one or more different kinds, to detect the targets. The output of the detection may be used for signaling a dangerous condition, such as a person approaching a dangerous area in an industrial environment, where a dangerous machinery or equipment is located.

As a safety measure can be automatically triggered upon detection of the dangerous condition, it is paramount that the safety device is not subject to any malfunction, and that eventual malfunctions are properly identified and remedied before any dangerous condition may happen unobserved.

The use of plural sensors with different technologies helps the device being more accurate in target detection, more robust to environment conditions which may affect only one of the sensors, and keeping on working in case of partial failures, until at least one sensor is active.

One kind of such sensors is based on an optic technology. Optical devices such as cameras are known in the art to include a lens and an image sensor, collecting image data. The lens focuses an optical image of a field of view on a focus area located at least in part on the optical sensor. Based on the design and position of the lens and image sensor, the image data collected may not only represent a portion of the outside environment, but also a portion of the lens casing.

In known systems, the accuracy of an optical device is estimated based on a visual marker, to be placed in the field of view in a fixed position relative to the optical device. The visual marker depicts a predetermined image, usually being a geometric pattern. So, the device compares the acquired image of the marker with stored parameters, to determine if the device is correctly calibrated, if the lens is contaminated, and if something the environment may obstruct the vision.

However, the marker must always be visible by the optical device. So, it requires an attentive installation in a fixed position, without incurring in damages for the whole lifetime of the optical device.

### Summary of the invention

The Applicant has tackled the problem of checking proper operation of an optical or hybrid device, while simplifying installation of the marker and giving it more protection during the lifetime of the optical device.

This and other problems are solved by a safety device for monitoring targets in an environment and an assembly method thereof according to any one of the appended claims.

The invention provides that a marker element is mounted in the through channel of the case where also the lens element is fitted. The marker element surrounds the lens element. The marker element has at least a marker portion, shaped and positioned such that the marker portion is included in the field of view of the lens. Thus, the marker portion appears as a visual marker in the optical image projected by the lens on the image sensor. Then, marker image data is collected, representing the visual marker, and can be analyzed to perform diagnostic and/or calibration functions.

In this manner, the marker element is mounted to the case of the device, instead of being inside the monitored area of the field of view. So, the marker element is easier to install, without the need to find the best place on a case-by-case basis, depending on the environment to be monitored.

In the preferred embodiment, the marker element is removably fitted in the through channel. Otherwise, the marker element may be mounted to the case by comolding.

Preferably, the marker portion has a color (which may be any kind of color, including black or white) in order to contrast the color of the channel wall of the through channel where the marker element and the lens element are fitted. Thus, the combined appearance of the marker portion and the channel wall may form the desired pattern with contrast lines helping the diagnostic and calibration of the device.

In the preferred embodiment, the marker element has an annular mounting portion and prongs projecting therefrom toward the outside of the main case. The marker can be fitted to the front wall of the main case from the side of its front surface or more preferably rear surface, and may be trapped between the front wall and the lens support.

### Brief description of the drawings

The present invention will now be described in more detail hereinafter with reference to the accompanying drawings, in which embodiments of the invention are shown.

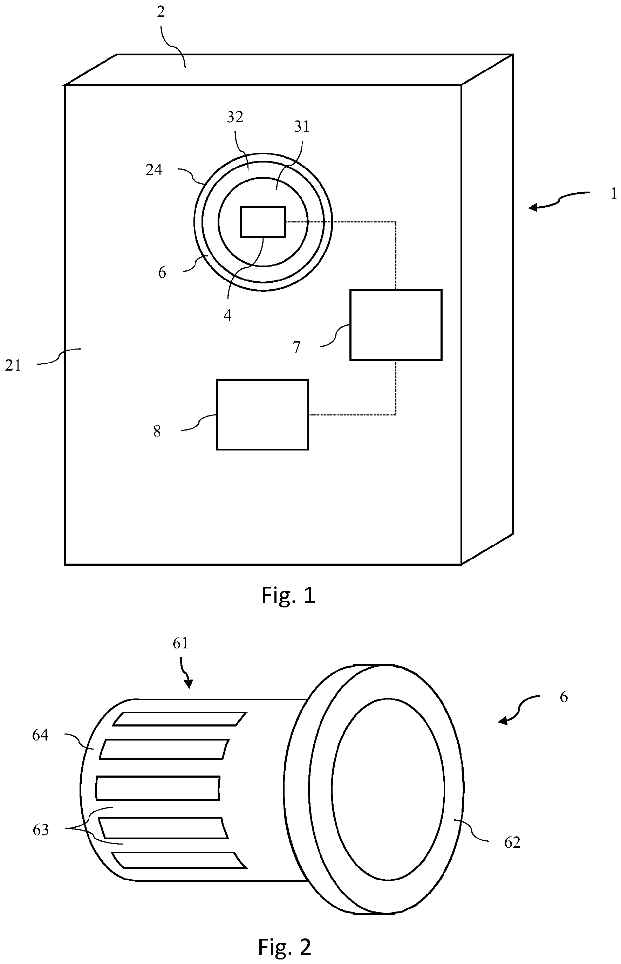

FIG. 1 is a schematic perspective view of a safety device for monitoring targets in an environment according to one embodiment of the present invention,
FIG. 2 is a perspective view of a marker element of the safety device of figure 1,
FIG. 3 is a section view of some details of the safety device of figure 1, and
FIG. 4 is an example image which may be captured by the safety device of figure 1, where portions of the marker element and of a channel wall are visible.

### Detailed description

A safety device for monitoring targets in an environment is referenced with number 1. The safety device 1 comprises a main case 2 having an inner room for housing the components detailed below. The main case 2 is configured to be opened and closed. For example, the main case 2 may comprise e vessel part and a lid part, adapted to be removably fixed together.

As described in more detail below, the safety device 1 includes some components that are typical of an optical device, namely a lens element 3 and an image sensor 4, which are arranged inside the main case 2. Moreover, the safety device 1 may include one or more further target detection sensors 8 still arranged in the main case 2, which is preferably a radar sensor, a lidar sensor and/or a laser scanner.

In some embodiments, the safety device 1 includes an entire optical device 5, with its own housing 51. The optical device 5 is arranged inside the main case 2, and the above mentioned components which are typical of an optical device are provided as elements of the actual optical device 5. Similarly, the safety device 1 may include an entire further target detection device (not shown) with its own housing, inside the main case 2, for accommodating the further target detection sensor 8.

In other embodiments, the components which are typical of an optical device are not grouped inside a separate housing 51 of an optical device 5, but are directly supported by the main case 2. Similarly, the further target detection sensor 8 may be directly supported by the main case 2.

The main case 2 comprises a front wall 21, which can be formed in the vessel part or in the lid part of the main case 2. The front wall 21 has a front surface 22 facing outside the main case 2 and a rear surface 23 facing inside the main case 2.

Moreover, the front wall 21 has a through channel 24, which is preferably circular, connecting the front and rear surfaces 22, 23. The channel 24 is delimited by a channel wall 25, surrounding and oriented toward a channel axis, extending in an axial direction transversal to the front wall 21.

The safety device 1 comprises a lens element 3. The lens element 3 in turn comprises an optical lens 31 having a lens contour, and a lens support 32 fixed to the optical lens 31, preferably along the lens contour. In some embodiments, the lens support 32 is a front part of the housing 51 of the optical device 5.

The lens support 32 is configured for fitting the optical lens 31 in the through channel 24, preferably in a removable manner. In detail, the lens support 32 may be configured for fixing to the main case 2 at the channel wall 25 or at the rear surface 23 of the front wall 21. In other embodiments, the fixing of the lens support 32 to the main case 2 may take place elsewhere, for example indirectly via the housing 51 of the optical device 5 or other components mentioned below.

The safety device 1 comprises an image sensor 4 arranged behind the optical lens 31. The image sensor 4 may be provided as a component of the optical device 5. Thus, the image sensor 4 is arranged inside the main case 2, and optionally also inside the housing 51 of the optical device 5.

The optical lens 31 is configured to project on the image sensor 4 an optical image of a field of view. The field of view depends on the shape and material of the optical lens 31, and is usually defined by a predetermined angle of view. The optical lens 31 is configured such that its field of view includes a portion of the environment outside the main case 2.

The image sensor 4 is configured to collect and to output image data. Therefore, the image data is representative at least of the optical image projected by the optical lens 31 on the image sensor 4. In particular, the image data include environment image data representing the portion of the environment outside the main case 2 falling in the field of view.

The invention provides that the safety device 1 comprises a marker element 6. The marker element 6 is mounted in the through channel 24 and surrounds the lens element 3.

In more detail, while the marker element 6 needs not be entirely inside the through channel 24, the marker element 6 has a marker portion 61 which is arranged inside the channel 24 and is shaped and positioned so as to be included in the field of view of the optical lens 31.

The marker element 6 further comprises a mounting portion 62 connected to the marker portion 61. The mounting portion 62 is configured for mounting to the main case 2 and/or to the lens support 32, such that the marker portion 61 is arranged inside the channel 24.

The mounting portion 62 needs not be inside the channel 24 or in the field of view of the optical lens 31. In the preferred embodiments, the mounting portion 62 is annular, arranged around the channel axis, and the marker portion 61 projects from the mounting portion 62 in the axial direction, within the through channel 24.

In the preferred embodiment, the marker element 6 is removably fitted in the through channel 24, and in particular the mounting portion 62 is configured for removable fitting to the main case 2 and/or to the lens support 32.

In other embodiments, the marker element 6 may be co-molded with the main case 2, or it can be co-molded with the lens element 3 for subsequent fitting to the main case 2.

Preferably, the mounting portion 62 is configured for fixing to the main case 2 at the channel wall 25 or at the rear surface 23 of the front wall 21. These parts may have one or more recesses for coupling with the mounting portion 62. Then, the marker portion 61 may project from the mounting portion 62 toward the outside of the main case 2. In the embodiment of the drawings, the annular mounting portion 62 abuts on the rear surface 23 of the front wall 21, around the channel 24. An outer dimension (for example diameter) of the mounting portion 62 is greater than an inner dimension (for example diameter) of the channel 24, such that the mounting portion 62 cannot be inserted in the channel 24.

In other embodiments, the mounting portion 62 may be fixed to the main case 2 at the front surface 22 of the front wall 21.

Moreover, the mounting portion 62 may be configured for fixing to the lens support 32. In the preferred embodiments, the mounting portion 62 is directly fixed to both the main case 2 and the lens support 32. At the same time, the main case 2 and the lens support 32 may be even directly fixed to each other, or they may be only indirectly fixed via the mounting portion 62 of the marker element 6.

In other embodiments, the mounting portion 62 may be only fixed to the main case 2 without the need to contact the lens support 32. In still other embodiments, the mounting portion 62 is only fixed to the lens support 32, without the need to contact the main case 2, though they are still at least indirectly connected.

Preferably, the marker element 6, and in particular the mounting portion 62, is trapped between the front wall 21 and the lens support 32. Thus, the marker element 6 is irremovable from the through channel 24 until the lens element 3 is removed from the front wall 21.

In particular, a method of assembling the safety device 1 may comprise in order the steps of first fitting the marker element 6 in the through channel 24, and then fitting the lens element 3 in the through channel 6 so as to trap the marker 6 between the front wall 21 and the lens support 32. Preferably, the marker element 6 and the lens element 3 are shaped such that these steps may not be performed in the reverse order.

As an alternative, the method may comprise, still in order, the steps of first fitting the marker element 6 to the lens support 32, and then fitting the lens element 3 in the through channel 6 so as to trap the marker 6 between the front wall 21 and the lens support 32.

Preferably, both the marker element 6 and the lens element 3 are configured to be fitted in and removed from the through channel 24 from the side of the rear surface 23 of the front wall 21. Therefore, in order to disassemble the safety device 1 the main case 2 should be first opened.

In other embodiments, the marker element 6 is configured to be fitted in and removed from the through channel 24 from the side of the front surface 22 of the front wall 21, while it is still preferred that the lens element 3 is configured to be fitted in and removed from the through channel 24 from the side of the rear surface 23.

In still other embodiments, the safety device 1 may be assembled by comolding the marker element 6 with the main case 2 or the lens element 3, and then fitting the lens element 3 in the through channel 6.

The marker portion 61 is shaped and arranged such that it appears in the optical image as a predetermined visual marker. Thus, the image data collected by the image sensor 4 not only comprises the aforementioned environment image data, but also marker image data representing the visual marker.

Herein, the term visual marker is used to designate the appearance of the marker portion 61, optionally in combination with other background elements, from the point of view of the image sensor 4. Thus, the visual marker is included in the optical image and may be also displayed in a digital image formed from the image data, in particular the marker image data.

In the preferred embodiment, the marker portion 61 projects from the mounting portion 62 in the through channel 24. In particular, the marker portion 61 may fully encircle the lens element 3, projecting from an entire perimeter of the annular mounting portion 62. Otherwise, the marker portion 61 may project from just a limited perimeter portion of the mounting portion 62.

Preferably, while the channel wall 25 has at least a channel portion with a first color, appearing in the optical image, the marker portion 61 has a second color different from the first color. Preferably, the first and second colors are contrasting colors, like black and white. Moreover, the maker portion 61 is shaped and positioned such that the visual marker shows the channel portion with the first color and the marker portion 61 with the second color interleaved to each other and defining a predetermined pattern. In other words, the visual marker formed in the optical image is formed from a combination of the appearances of the marker portion 61, in the foreground, and of the channel wall 25, in the background.

In the preferred embodiment, this is obtained by the marker portion 61 comprising a plurality of prongs 63. The prongs 63 project from the mounting portion 62, in particular toward the outside of the main case 2. Preferably, each prong 63 extends mainly in the axial direction, and the prongs 63 may be substantially parallel to each other. The prongs 63 may be distributed along an entire perimeter of the mounting portion 62, or just along a limited perimeter portion. As shown in the figures, the mounting portion 62 may outwardly project in a radial direction, compared to the marker portion 61, for the fitting purpose.

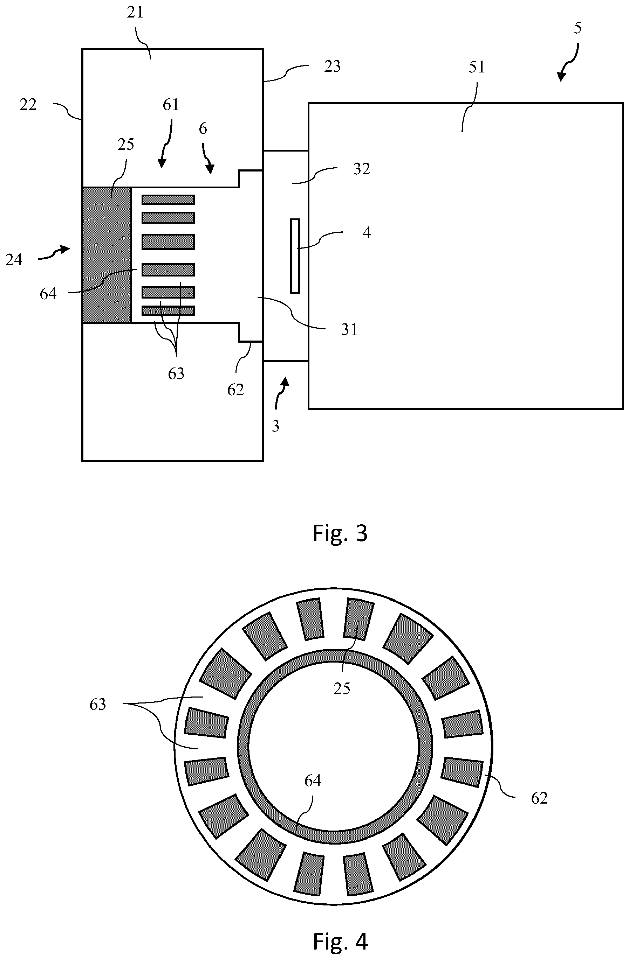

Thus, the prongs 63 overlap the channel wall 25 at the channel portion with the first color, such that the first color is visible between adjacent prongs 63, from the point of view of the image sensor 4. This is shown in figure 4.

In other embodiments, the prongs 63 may have different lengths to each other, or may be inclined to the axial direction and/or each other, for example the prongs 63 may be arranged as a grid.

Preferably, a bridge portion 64, spaced from the mounting portion 62, connects the prongs 63 to each other. In the embodiment of the drawings, the bridge portion 64 is annular-shaped. The bridge portion 64 may be arranged at end portions of the prongs 63, distal from the mounting portion 62. As an alternative, the bridge portion 64 may be arranged at intermediate portions of the prongs 63, between the mounting portion 62 and free end portions of the prongs 63. The bridge portion 64 increases the stiffness of the marker element 6, preventing bending of the prongs 63.

In still other embodiments, the marker portion 61 already has plural colors forming a predetermined pattern. Thus, no portion of the channel wall 25 needs be visible from the point of view of the image sensor 4 in order to define the visual marker.

The safety device 1 comprises an electronic monitoring system 7, in signal communication with the image sensor 4 to receive the collected image data. If provided, the monitoring system 7 is also in signal communication with the further target detection sensor 8. The monitoring system 7 may comprise one or more processing units, arranged in the main case 2. In some embodiments, one or more of the processing units may be incorporated in the optical device 5, inside its housing 51, and/or in the further target detection device.

The monitoring system 7 is configured to perform a safety function, including detecting targets in the environment portion falling within the field of view, at least from the collected environment image data. Preferably, the safety function involves detecting targets based on a combination of the environment image data and further target detection data from the further target detection sensor 8, namely data fusion. The safety function may further comprise one or more subfunctions, such as target classification, target position determination, and/or generating target-based control signals for an external device, such as an alarm device, a machinery or another other dangerous device.

The monitoring system 7 is further configured to perform a diagnostic and/or calibration function including analyzing the marker image data. In particular, a diagnostic function may include determining an image quality level, in the form of one or more image quality parameters, based on the appearance of the visual marker in the marker image data. Then, the diagnostic function may provide a malfunction signal in case of the image quality being poor. Examples of poor image quality levels are associated to contaminated or obstructed optical lens 31, low environment light, solid or diffused visual obstacles in the environment, aged optical lens 31 or image sensor 31, and disturbed image data collection.

The calibration function may involve determining from the marker image data calibration parameters, such as calibration parameters to be selected for autosetting. The calibration function preferably also comprises applying the determined calibration parameters to image processing by the image sensor 4. Example calibration parameters are contrast, white balance and exposure.

## Claims

1. A safety device (1) for monitoring targets in an environment, comprising:
- a main case (2) having a front wall (21) with a through channel (24) delimited by a channel wall (25),
- an image sensor (4) arranged in the main case (2),
- a lens element (3), comprising a lens support (32) and an optical lens (31) fixed to the lens support (32), the lens support (32) being configured for fitting the optical lens (31) in the through channel (24), the optical lens (31) being configured to project on the image sensor (4) an optical image of a field of view, including a portion of the environment outside the main case (2),
- an electronic monitoring system (7), arranged in the main case (2) and in signal communication with the image sensor (4) to receive image data, the image data comprising environment image data representing the environment, the monitoring system (7) being configured to perform a safety function, including detecting targets in the environment from the environment image data,
**characterized by**:
- a marker element (6), mounted in the through channel (24) and surrounding the lens element (3),
- wherein the marker element (6) has at least a marker portion (61), shaped and positioned such that the marker portion (61) is included in the field of view and appears in the optical image as a predetermined visual marker, the image data further comprising marker image data representing the visual marker,
- the monitoring system (7) is further configured to perform a diagnostic and/or calibration function including analyzing the marker image data.

2. The safety device (1) of claim 1, wherein the marker element (6) is removably fitted in the through channel (24).

3. The safety device (1) of claim 1 or 2, wherein the marker element (6) is trapped between the front wall (21) and the lens support (32).

4. The safety device (1) of any claim 1-3, wherein:
- the front wall (21) comprises a front surface (22) facing outside the main case (2) and a rear surface (23) facing inside the main case (2), and
- both the marker element (6) and the lens element (3) are configured to be fitted in and removed from the through channel (24) from a side of the rear surface (23) of the front wall (21).

5. The safety device (1) of any claim 1-3, wherein:
- the front wall (21) comprises a front surface (22) facing outside the main case (2) and a rear surface (23) facing inside the main case (2), and
- the marker element (6) is configured to be fitted in and removed from the through channel (24) from a side of the front surface (22) of the front wall (21).

6. The safety device (1) of any claim 1-5, wherein:
- the marker element (6) comprises an annular mounting portion (62) configured for mounting to the main case (2) and/or to the lens support (32), and
- the marker portion (61) projects from the mounting portion (62) in the through channel (24).

7. The safety device (1) of any claim 1-6, wherein:
- the channel wall (25) has a channel portion with a first color appearing in the optical image,
- the marker portion (61) has a second color different from the first color,
- the marker portion (61) is shaped and positioned such that the visual marker shows the channel portion with the first color and the marker portion (61) with the second color interleaved to each other and defining a predetermined pattern.

8. The safety device (1) of claim 7, wherein the marker portion (61) comprises a plurality of prongs (63) overlapping the channel portion with the first color.

9. The safety device (1) of the combination of claims 6 and 8, wherein the prongs (63) project from the mounting portion (62) toward the outside of the main case (2).

10. The safety device (1) of any claim 1-9, comprising an optical device (5) arranged inside the main case (2), wherein the optical device (5) comprises a housing (51), the lens support (32) being part of the housing (51) and the image sensor (4) being arranged inside the housing (51).

11. The safety device (1) of any claim 1-10, comprising a further target detection sensor (8) arranged in the main case (2), and an electronic monitoring system (7) configured to detect targets in the environment based on data fusion between image data from the image sensor (4) and further target data from the further target detection sensor (8), wherein the further target detection sensor (8) is preferably a radar sensor, a lidar sensor or a laser scanner.

12. The safety device (1) of claim 1 or any claim 6-11, wherein the marker element (6) is co-molded with the through channel (24).

13. A method of assembling the safety device (1) of any claim 1-11, comprising, in order:
- fitting the marker element (6) in the through channel (24) or to the lens support (32), and
- fitting the lens element (3) in the through channel (24) so as to trap the marker between the front wall (21) and the lens support (32).
